# EUROPÄISCHE PATENTANMELDUNG

(11) **EP 2 330 722 A2**
(43) Veröffentlichungstag der Anmeldung: **08.06.2011**
(21) Anmeldenummer: 10014474.0
(22) Anmeldetag: 11.11.2010
(51) Int. Cl.: H02K 15/095, H02K 1/14

(54) **Herstellung eines kettengewickelten Stators für Elektromotoren**

(30) Priorität: 03.12.2009 DE 102009056855
(71) Anmelder: WILO SE, 44263 Dortmund (DE)
(72) Erfinder: Rucha, Christian, 58644 Iserlohn (DE)
(74) Vertreter: COHAUSZ DAWIDOWICZ HANNIG & SOZIEN

(57) **Zusammenfassung**

Die Erfindung betrifft ein Verfahren und eine Vorrichtung zur Herstellung eines kettengewickelten Stators insbesondere eines Permanentmagnet-Motors mit Statorsegmenten als Spulenträger, die jeweils einen äußeren Rückschluss-Ringabschnitt und einen daran angeordneten, nach innen ragenden Polschenkel mit Spulenträger aufweisen, der mit Wickeldraht umwickelt wird, wobei zwei, drei oder mehr Statorsegmente jeweils eine Kette bilden, die zwischen den übrigen Statorsegmenten der/den übrigen Kette(n) liegen, und die Wicklungsdrahtenden der Spulen jeder Kette miteinander verbunden sind, wobei jede Kette getrennt von der/den übrigen Kette(n) bewickelt wird, wobei die Kette nach außen gewendet ist, indem die Polschenkel mit Spulenträger nach außen weisen und die Rückschluss-Ringabschnitte innen liegen, und dass im jeweils nach außen gewendeten Zustand die Ketten ineinander gesetzt werden und dass erst danach alle den Stator bildenden Statorsegmente nach innen gewendet werden.

## Beschreibung

Die Erfindung betrifft ein Verfahren und eine Vorrichtung zum Herstellen eines kettengewickelten Stators insbesondere eines Permanentmagnet-Motors mit Statorsegmenten und Spulenträgern. Die Statorsegmente weisen jeweils einen äußeren Rückschluss-Ringabschnitt und einen daran angeordneten, nach innen ragenden Polschenkel auf, die mit Spulenträger versehen und mit Wickeldraht umwickelt werden, wobei zwei, drei oder mehr Statorsegmente jeweils eine Kette bilden, die zwischen den übrigen Statorsegmenten der/den übrigen Kette(n) liegen, und die Wicklungsdrahtenden der Spulen jeder Kette miteinander verbunden sind.

Kettenwicklungen (durchwickeln von Gruppen, Reihenschaltung von Gruppen) finden bei konventionellen Asynchronmotoren seit langer Zeit Anwendung. Allerdings werden dabei die Wicklungen in Nuten des Stators gelegt, Neuer ist die Kettenwicklung bei der so genannten Einzelzahnwicklung. Hierbei werden die Drähte um isolierte Eisenkerne (Polschenkel und Spulenträger der Statorsegmente) gewickelt, die einen äußeren Rückschluss-Ringabschnitt und einen nach innen weisenden Polschenkel aufweisen, und die zusammengesetzt den Stator bilden.

Der Stator kann sich aus 9 einzelnen Statorsegmenten zusammensetzen, die jeweils aus einem Eisenkern und einer Isolierung bestehen. Um den Polschenkel wird ein Kupferdraht gewickelt. Herkömmliche Statorsegmente besitzen immer 2 Drahtenden, die extern geschaltet werden müssen. Daraus resultieren bei 9 Segmenten 18 Drahtenden, die zur internen Schaltung des Stators positioniert und verschweißt, bzw. kontaktiert, werden. Das Handling der Drähte ist noch zu bewältigen, wenn der maximale Drahtdurchmesser = 1 mm beträgt. Hiermit ist jedoch die Grenze der manuellen Handhabung erreicht. Bei größeren Statoren werden dagegen Drähte >1mm Durchmesser verwendet. In der Fertigung führen derart dicke Drähte zu großen Schwierigkeiten in der Handhabung und der Qualität, da der Montageprozess viele manuelle Schritte benötigt. Aufgrund dieser Probleme wurde die Kettenwicklung geschaffen, die aber bei der Montage der Ketten mit Drähten mit großen Durchmessern zu dem Problem führt, da die steifen Verbindungsdrähte im Weg stehen, wenn die Ketten ineinander gesteckt werden, um den Stator zu bilden. Die dicken Drähte lassen eine Automatisierung nicht zu, so dass der Zusammenbau von Hand erfolgen muss.

Aufgabe der Erfindung ist es, ein Verfahren und eine Vorrichtung zu schaffen, durch die einzelne Ketten eines kettengewickelten Stators leicht und insbesondere automatisch zusammensetzbar sind, insbesondere wenn die Wicklungsdrahtenden aufgrund ihres großen Drahtdurchmessers unflexibel sind.

Diese Aufgabe wird erfindungsgemäß dadurch gelöst, dass jede Kette getrennt von der/den übrigen Kette(n) gewickelt wird, wobei die Kette nach außen gewendet ist, indem die Polschenkel nach außen weisen und die Rückschluss-Ringabschnitte innen liegen, und dass im jeweils nach außen gewendeten Zustand die Ketten ineinander gesetzt werden und dass erst danach alle den Stator bildenden Statorsegmente mit Spulenträger nach innen gewendet werden.

Bei dieser Lösung werden die einzelnen Ketten nach außen gewendet zusammengefügt, so dass die Wicklungen bzw. die Polschenkel nach außen stehen. Dadurch gibt es keine Behinderung der steifen Wicklungsdrähte untereinander, da sie im Innenraum verlaufen.

Mit dem neuen Fertigungsverfahren reduziert sich die Anzahl der Drahtenden von 18 auf 6. Neben der Handhabung wird auch der gesamte Fertigungsprozess des Stators optimiert. Es werden Schweißstellen und Arbeitsschritte reduziert und somit mögliche Fehlerquellen ausgeschlossen. Daraus resultierend werden die Herstellkosten der Statore gesenkt.

Da die einzelnen Ketten im nach außen gewendeten Zustand zusammengesetzt werden, ist gegeben, dass nach dem Wickeln und während des Ineinandersetzens der einzelnen Ketten die Verbindungsdrähte zwischen den Statorsegmenten jeder Kette sich im Innenraum der nach außen gewendeten Kette befinden.

Auch ist von Vorteil, dass das Zusammenführen der einzelnen Ketten zu der Gesamtkette in der Weise erfolgt, dass die einzelnen Ketten in Richtung der Drehachse des Motors axial ineinander geschoben werden. Ferner ist darauf zu achten, dass die die Statorsegmente verbindenden Drähte einer Kette so lang ausgeführt sind, dass sie ein Zurückwenden aller Statorsegmente der Gesamtkette nach innen zulassen.

Vorzugsweise wird für das Verfahren vorgeschlagen, dass die Statorsegmente einer Kette nacheinander bewickelt werden und hierbei die Kette mit allen Statorsegmenten um die eigene Querachse des Polschenkels des jeweils zu bewickelnden Polschenkels rotiert. Auch sollte der Rückschlussringabschnitt zusammen mit dem Eisenkern des Polschenkels aus paketierten Blechen bestehen. Ferner liegt über jedem Polschenkel ein Spulenträger als Isolierung, um die der Kupferdraht gewickelt wird.

Eine besonders vorteilhafte schnelle und sichere Durchführung ist gegeben, wenn beim Zurückwenden der Gesamtkette nach innen alle oder einzelne insbesondere die Mehrzahl der Statorsegmente auf Bögen geführt werden. Vorzugsweise wird vorgeschlagen, dass die Gesamtkette aus zwei Ketten mit jeweils zwei oder drei Statorsegmenten oder aus drei Ketten mit jeweils zwei, drei oder vier Statorsegmenten besteht.

Vorzugsweise wird auch vorgeschlagen, dass während des Wendens der Statorsegmente die Längsachsen der Statorsegmente stets parallel zur Motorenachse verbleiben.

Besonders vorteilhaft ist, wenn vor dem Zusammenfügen der insbesondere kreisförmig angeordneten Ketten ineinander, die Statorsegmente radial soweit nach außen bewegt werden, dass zwischen benachbarten Statorsegmenten jeweils ein Abstand besteht, der ein Zusammensetzen der Ketten ineinander erleichtert. Hierbei können, nach dem Zusammensetzen zur Gesamtkette und vor dem Wenden in die endgültige Lage, die einzelnen Statorsegmente einander so genähert werden, dass die Seitenkanten der Statorsegmente einander nahe sind und insbesondere einander berühren.

Eine besonders einfach, schnell und effizient arbeitende Vorrichtung zum Erstellen und insbesondere zum Zurückwenden einer aus Statorsegmenten bestehenden Gesamtkette ist dann gegeben, wenn die Vorrichtung Aufnahmeteile aufweist, von denen jeweils ein Aufnahmeteil ein Statorsegment trägt, und alle oder einzelne insbesondere die Mehrzahl der Aufnahmeteile entlang Bögen geführt werden. Hierbei sind die Aufnahmeteile über ein Getriebe, insbesondere motorisch, bewegbar.

Eine hohe Funktionstüchtigkeit ist dann gegeben, wenn die formschlüssig ineinander greifenden Seitenkanten der Rückschlussringabschnitte der Statorsegmente eine Profilierung aufweisen, so dass die Seitenkanten vor, während und nach dem Wenden stets miteinander formschlüssig im Eingriff sind. Hierbei kann der Profilierungsquerschnitt s-förmig sein.

Ein Ausführungsbeispiel der Erfindung ist in den Zeichnungen dargestellt und wird im Folgenden näher beschrieben. Es zeigen:
- Figur 1: drei ineinandergesetzte Ketten vor dem Zurückwenden in die endgültige Statorlage;
- Figur 2: die Kette nach dem Öffnen aus der in Figur 1 gezeigten Lage;
- Figur 3: die Kette nach weiterem Wenden, in der geraden Stellung;
- Figur 4: die Kette nach weiterem Wenden;
- Figur 5: die Kette in der endgültigen Stator-Stellung.

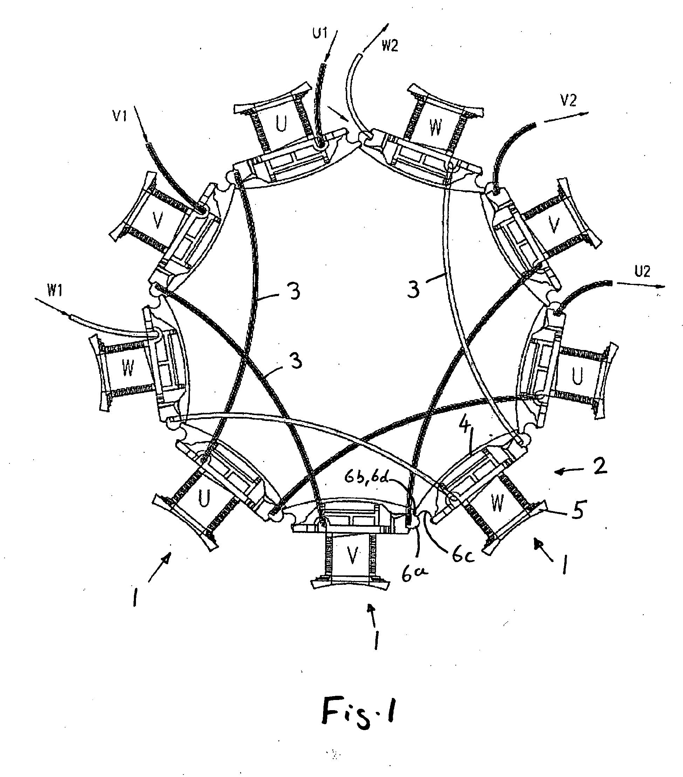

Der Stator eines Permanentmagnetmotors ist aus zwei, drei oder mehr Staotrsegment-Ketten 1 zusammengesetzt. Hierbei weist jede Kette 1 zwei, drei oder vier Statorsegmente 2 auf. In dem in Figur 1 dargestellten Beispiel besteht der Stator aus drei einzelnen Ketten 1 mit jeweils drei Statorsegmenten 2, wobei nur die Wicklungsenden der Statorensegmente einer Kette miteinander durch Kupferdrähte 3 verbunden sind. Damit bilden die Wicklungsenden der Statorensegmente Verbindungsdrähte 3 zwischen den Statorsegmenten 2 und damit zwischen den Spulen der Phasen U, V und W der Statorsegmente 2.

Jedes Statorsegment weist einen Rückschlusringabschnitt 4 auf, der im fertigen Zustand des Stators mit den übrigen Abschnitten 4 den äußeren Rückschlussring bildet. An der Innenseite des Rückschlussrings ist ein Polschenkel 5 angeformt, über dem außen ein Spulenträger als Isolierung liegt, um den der Kupferwicklungsdraht gewickelt ist. Rückschlussring 4 und Polschenkel 5 werden aus einer Vielzahl einzelner Bleche gebildet, die zum Paket fixiert werden.

Zuerst werden die Statorsegmente 2 einer Kette 1 nacheinander bewickelt. Hierzu rotiert die Kette mit allen Statorsegmenten um die eigene Querachse des zu bewickelnden Polschenkels 5. Beim Bewickeln der Polschenkel 5 im nach außen gewendeten Zustand sind die drei Statorsegmente 2 einer Kette 1 nah beieinander, um in der Bewicklungsvorrichtung Platz zu sparen. Hierbei werden aber die verbindenen Wicklungsdrähte 3 genügend lang gewählt, damit später ein Wenden möglich ist.

Danach werden die drei Statorsegmente 2 radial nach außen bewegt und zwar weiter nach außen als deren spätere Lage im fertigen Stator, damit beim späteren Zusammenfügen der drei Ketten ineinander es nicht zur Kollisionen kommt. Dann werden die drei Ketten in axialer Richtung nacheinander ineinander gesetzt.

Darauf werden die drei Ketten radial einander genähert, bis sie die Seitenkanten der Rückschluss-Ringabschnitte einander berühren. Dabei ist von Bedeutung, dass die einander gegenüberliegenden, zueinander parallelen Seitenkanten 6 der Rückschluss-Ringsabschnitte 4 so geformt sind, dass zwei einander benachbarte und insbesonders einander berührende Seitenkanten 6 formschlüssig ineinander greifen, während die aus drei Ketten 1 bestehende Gesamtkette zurückgewendet wird. Auch danach bieten die geformten Seitenkanten 6 formschlüssigen Halt, wenn die Statorsegmente 2 den Stator bilden.

In dem in Figur 1 dargestellten Ausführungsbeispiel wird deutlich, dass stets eine Seitenkante 6 einen konvex gebogenen teilzylindrischen Vorsprung 6a und eine dazu parallele konkave Nut 6b aufweist und dass die Seitenkante 6 des benachbarten Rückschluss-Ringabschnitts entsprechend komplementär und damit ergänzend geformt ist mit einer teilzylindrichen Nut 6c, die den Vorsprung 6a übergreift und mit einem Vorsprung 6d, der in der Nut 6b einliegt bzw. eingreift. Hierbei bilden Vorsprung 6a und Nut 6b sowie Nut 6c und Vorsprung 6d jeweils eine S-förmige Kontur.

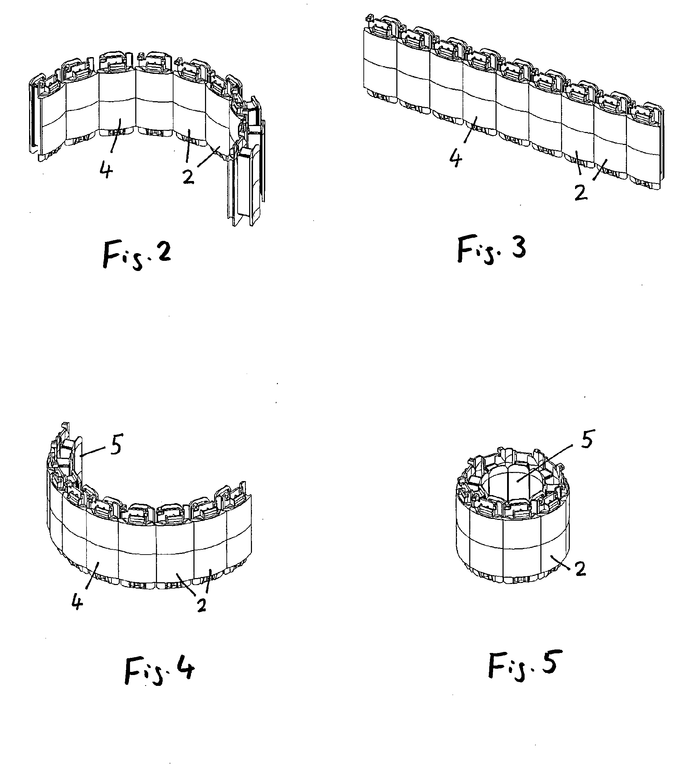

Erst dann wird die Gesamtkette gewendet. Hierbei wird die Gesamtkette an der Stelle geöffnet, an der zwei Kettenenden der Gesamtkette miteinander durch Drähte nicht verbunden sind, und es wird die Gesamtkette bei zu einer gestreckten Lage und noch darüber hinaus bis in die entgegengesetzte Krümmung bewegt, bis wieder die zwei Enden der Gesamtkette einander berühren. Dies ist in den Figuren 2 bis 5 dargestellt.

Das Wenden der fertigen Gesamtkette erfolgt vorzugsweise durch eine durch einen Elektromotor angetriebene mechanische Vorrichtung, die für jedes Statorsegment ein Aufnahmeteil aufweist, auf dem jeweils ein Statorsegment lösbar befestigt wird. Die Aufnahmeteile werden über ein Getriebe und Führungen entlang bogenförmigen Schlitzen geführt. Hierdurch werden alle Statorsegmente von der in Figur 1 gezeigten Position (nach einer radialen Bewegung und damit einer gegenseitigen Beabstandung) in die in Figur 5 gezeigte Position über die Zwischenstellungen gebracht, die in den Figuren 2 bis 4 gezeigt sind. Damit wird eine Automatisierung des Zurückwendens ermöglicht.

## Patentansprüche

1. Verfahren zur Herstellung eines kettengewickelten Stators insbesondere eines Permanentmagnet-Motors mit Statorsegmenten (2) und Spulenträger, die jeweils einen äußeren Rückschluss-Ringabschnitt (4) und einen daran angeordneten, nach innen ragenden Polschenkel (5) aufweisen, der mit Wickeldraht umwickelt wird, wobei zwei, drei oder mehr Statorsegmente (2) jeweils eine Kette (1) bilden, die zwischen den übrigen Statorsegmenten der/den übrigen Kette(n) liegen, und die Wicklungsdrahtenden (3) der Spulen jeder Kette miteinander verbunden sind, **dadurch gekennzeichnet, dass** jede Kette (1) getrennt von der/den übrigen Kette(n) bewickelt wird, wobei die Kette nach außen gewendet ist, indem die Polschenkel (5) nach außen weisen und die Rückschluss-Ringabschnitte innen liegen, und dass im jeweils nach außen gewendeten Zustand die Ketten ineinander gesetzt werden und dass erst danach alle den Stator bildenden Statorsegmente (2) nach innen gewendet werden.

2. Verfahren nach Anspruch 1, **dadurch gekennzeichnet, dass** nach dem Wickeln und während des Ineinandersetzens der einzelnen Ketten (1) die Verbindungsdrähte (3) zwischen den Statorsegmenten (2) jeder Kette sich im Innenraum der nach außen gewendeten Kette befinden.

3. Verfahren nach Anspruch 1 oder 2, **dadurch gekennzeichnet, dass** das Zusammenführen der einzelnen Ketten (1) zu der Gesamtkette in der Weise erfolgt, dass die einzelnen Ketten in Richtung der Drehachse des Motors axial ineinander geschoben werden.

4. Verfahren nach einem der vorherigen Ansprüche, **dadurch gekennzeichnet, dass** die die Statorsegmente (2) verbindenden Drähte (3) einer Kette (1) so lang ausgeführt sind, dass sie ein Zurückwenden aller Statorsegmente (2) der Gesamtkette nach innen zulassen.

5. Verfahren nach einem der vorherigen Ansprüche, **dadurch gekennzeichnet, dass** die Statorsegmente (2) einer Kette (1) nacheinander bewickelt werden und hierbei die Kette mit allen Statorsegmenten um die eigene Querachse des Polschenkels (5) des jeweils zu bewickelnden Polschenkels rotiert.

6. Verfahren nach einem der vorherigen Ansprüchen, **dadurch gekennzeichnet, dass** beim Zurückwenden der Gesamtkette nach innen alle oder einzelne insbesondere die Mehrzahl der Statorsegmente (2) auf Bögen geführt werden.

7. Verfahren nach einem der vorherigen Ansprüche, **dadurch gekennzeichnet, dass** die Gesamtkette aus zwei Ketten (1) mit jeweils zwei oder drei Statorsegmenten (2) oder aus drei Ketten mit jeweils zwei, drei oder vier Statorsegmenten besteht.

8. Verfahren nach einem der vorherigen Ansprüche, **dadurch gekennzeichnet, dass** während des Wendens der Statorsegmente (2) die Längsachsen der Statorsegmente stets parallel zur Motorenachse verbleiben.

9. Verfahren nach einem der vorherigen Ansprüche, **dadurch gekennzeichnet, dass** vor dem Zusammenfügen der insbesondere kreisförmig angeordneten Ketten (1) ineinander die Statorsegmente (2) radial soweit nach außen bewegt werden, dass zwischen benachbarten Statorsegmenten jeweils ein Abstand besteht, der ein Zusammensetzen der Ketten (1) ineinander erleichtert.

10. Verfahren nach Anspruch 9, **dadurch gekennzeichnet, dass** nach dem Zusammensetzen zur Gesamtkette und vor dem Wenden in die endgültige Lage die einzelnen Statorsegmente (2) einander so genähert werden, dass die Seitenkanten (6) der Statorsegmente einander nahe sind und insbesondere einander berühren.

11. Vorrichtung zum Erstellen und insbesondere Zurückwenden einer aus Statorsegmenten (2) bestehenden Gesamtkette, die nach dem Verfahren nach einem der vorherigen Ansprüche erstellt ist, **dadurch gekennzeichnet, dass** die Vorrichtung Aufnahmeteile aufweist, von denen jeweils ein Aufnahmeteil ein Statorsegment (2) trägt, und dass alle oder einzelne insbesondere die Mehrzahl der Aufnahmeteile entlang Bögen geführt sind.

12. Vorrichtung nach Anspruch 11, **dadurch gekennzeichnet, dass** die Aufnahmeteile über ein Getriebe insbesondere motorisch bewegbar sind.

13. Verfahren nach einem der vorherigen Ansprüche, **dadurch gekennzeichnet, dass** die formschlüssig ineinander greifenden Seitenkanten (6) der Rückschlussringabschnitte (4) eine Profilierung aufweisen, so dass die Seitenkanten vor, während und nach dem Wenden stets miteinander formschlüssig im Eingriff sind.

14. Vorrichtung nach Anspruch 13, **dadurch gekennzeichnet, dass** der Profilierungsquerschnitt S-förmig ist.

15. Verfahren nach einem der vorherigen Ansprüche, **dadurch gekennzeichnet, dass** der Rückschlussringabschnitt (4) zusammen mit dem Eisenkern des Polschenkels (5) aus paketierten Blechen besteht.

16. Verfahren nach einem der vorherigen Ansprüche, **dadurch gekennzeichnet, dass** über jedem Polschenkel (5) ein Spulenträger als Isolierung liegt, um die der Kupferdraht gewickelt wird.
